# DEMANDE DE BREVET EUROPEEN

(11) **EP 3 367 006 A1**
(43) Date de publication de la demande: **29.08.2018**
(21) Numéro de dépôt: 18156343.8
(22) Date de dépôt: 12.02.2018
(51) Int. Cl.: F24D 19/10, F24D 5/02, F24D 5/12, F24F 5/00, F24D 17/02

(54) **SYSTEME DE CLIMATISATION MULTI-ENERGIE**

(30) Priorité: 23.02.2017 FR 1751429
(71) Demandeur: Fondis, 68800 Vieux Thann (FR)
(72) Inventeur: BALD, Gaby-Yves, 68920 WETTOLSHEIM (FR); HAAS, Frédéric, 68460 LUTTERBACH (FR)
(74) Mandataire: Merckling, Norbert

(57) **Abrégé**

Le système de climatisation (1) multi-énergie comprend une pompe à chaleur (3) située à l'extérieur de l'habitation (2) et un dispositif de chauffage (4) combustible comportant un dispositif de circulation d'air (9) qui prélève l'air de l'habitation (2) pour lui faire traverser un premier échangeur de chaleur (10) puis le diffuser dans l'habitation (2), le dispositif de chauffage (4) à combustible, lorsqu'il est en fonctionnement, réchauffant l'air circulant dans le dispositif de circulation d'air (9). La pompe à chaleur (3) fonctionne de manière réversible au moyen d'un premier fluide caloporteur toxique et/ou inflammable et échange des calories ou des frigories avec l'air extérieur pour chauffer ou refroidir un second échangeur de chaleur (18). Un dispositif de circulation (19) en boucle d'un second fluide caloporteur non toxique et non inflammable raccorde le premier échangeur de chaleur (10) au second échangeur de chaleur (18) et autorise l'échange de calories ou des frigories entre les deux échangeurs de chaleur (10, 18).

## Description

### Domaine technique

La présente invention se rapporte à un système de climatisation multi-énergie basé sur l'utilisation conjointe d'un dispositif de chauffage à combustible de type cheminée ou poêle, et d'une pompe à chaleur.

L'invention concerne plus particulièrement un système de climatisation réversible multi-énergie dans lequel le dispositif de chauffage à combustible est situé dans une habitation tandis que la pompe à chaleur est située à l'extérieur.

### Etat de la technique

Il est connu d'associer une cheminée située dans l'habitation et une pompe à chaleur au sein d'un même système de climatisation multi-énergie. Dans ce type de système de climatisation réversible multi-énergie, la cheminée est située dans l'habitation tandis que la pompe à chaleur est située à l'extérieur. La pompe à chaleur récupère des calories ou des frigories à l'extérieur pour les restituer au niveau de la cheminée où elles sont par exemple utilisées dans un dispositif de circulation d'air prévu. Les calories ou les frigories sont véhiculées par un fluide caloporteur. Comme ce fluide caloporteur circule dans l'habitation, notamment à proximité immédiate d'une cheminée il s'agit généralement d'eau, car tout fluide caloporteur toxique et/ou inflammable est habituellement interdit dans les habitations.

Or l'utilisation d'eau comme fluide caloporteur dans la pompe à chaleur génère de nombreux problèmes, notamment au démarrage ou lors de conditions climatiques extrêmement froides.

Ce type de système de climatisation multi-énergie antérieur n'est donc pas satisfaisant.

Par les demandes de brevet US 2001/0042610 A1 et FR 2860061 A1, il est connu de combiner un condenseur placé à l'extérieur de l'habitation, avec une cheminée située dans l'habitation. Ces condenseurs ne sont cependant pas réversibles et sont prévus uniquement pour fonctionner en été afin de faire du froid, alors qu'ils sont éteints et inutilisés en hiver.

### Description de l'invention

L'objet de la présente invention vise par conséquent à pallier les inconvénients de l'art antérieur en proposant un nouveau type de système de climatisation réversible multi-énergie.

Les objets assignés à l'invention sont atteints à l'aide d'un système de climatisation réversible multi-énergie pour le chauffage et le refroidissement d'une habitation, ledit système de climatisation comprenant une pompe à chaleur destinée à être placée à l'extérieur d'une habitation et un dispositif de chauffage à combustible destiné à être placé à l'intérieur d'une habitation, ce système de climatisation étant caractérisé en ce que :
- le dispositif de chauffage à combustible comporte un dispositif de circulation d'air qui prélève de l'air pour lui faire traverser un premier échangeur de chaleur puis le diffuser ;
- le dispositif de chauffage à combustible, lorsqu'il est en fonctionnement, réchauffe l'air qui circule dans le dispositif de circulation d'air ;
- la pompe à chaleur fonctionne de manière réversible au moyen d'un premier fluide caloporteur toxique et/ou inflammable et échange des calories ou des ou des frigories avec l'air extérieur pour chauffer ou refroidir un second échangeur de chaleur ; et
- un dispositif de circulation en boucle d'un second fluide caloporteur non toxique et non inflammable raccorde le premier échangeur de chaleur au second échangeur de chaleur et autorise l'échange de calories ou des frigories entre ces deux échangeurs de chaleur.

Ainsi, la combinaison d'une pompe à chaleur et d'un dispositif de chauffage à combustible permet non seulement de combiner deux sources de chauffage distinctes en hiver, pour une meilleur efficacité globale du chauffage, mais permet également d'avoir une source de froid en été lorsque la chaleur devient difficilement supportable.

En outre, grâce à l'invention la pompe à chaleur située à l'extérieur peut fonctionner avec un fluide caloporteur performant et potentiellement toxique et/ou inflammable, tandis qu'un autre fluide caloporteur non toxique et non inflammable est utilisé pour le transport des calories ou des frigories entre la pompe à chaleur et les dispositifs situés dans l'habitation.

En outre, une fois la pompe à chaleur installée à l'extérieur, le reste de l'installation ne nécessite pas l'intervention d'un frigoriste mais peut être réalisé par une chauffagiste plombier.

Selon un exemple de mise en oeuvre de l'invention le dispositif de chauffage à combustible est une cheminée d'âtre ou un poêle à combustible solide.

Selon un autre exemple de mise en oeuvre de l'invention le premier fluide caloporteur est un fluide frigorigène de type R.

Selon un exemple supplémentaire de mise en oeuvre de l'invention le second fluide caloporteur est de l'eau.

Selon un exemple de mise en oeuvre de l'invention le dispositif de circulation d'air comprend un ventilateur ou une turbine qui aspire l'air de l'habitation et le souffle dans l'habitation après lui avoir fait traverser le premier échangeur de chaleur.

Selon un autre exemple de mise en oeuvre de l'invention, le système de climatisation multi-énergie comprend une pompe de recirculation faisant circuler le second fluide caloporteur en boucle entre les deux échangeurs de chaleur.

Selon un exemple supplémentaire de mise en oeuvre de l'invention, le système de climatisation multi-énergie comprend en outre :
- une première sonde de température qui mesure la température extérieure ;
- une seconde sonde de température qui mesure la température du second fluide caloporteur ;
- une troisième sonde de température qui mesure la température dans l'habitation ; et
- un dispositif de régulation reliés auxdites sondes de température, ledit dispositif de régulation contrôlant le fonctionnement de la pompe à chaleur en fonction des températures mesurées par lesdites sondes.

Selon un exemple de mise en oeuvre de l'invention, le dispositif de circulation d'air comprend un réseau aéraulique lequel comporte au moins un conduit raccordé à au moins une entrée d'air, et le système de climatisation multi-énergie comprend en outre :
- une quatrième sonde de température qui mesure la température en sortie de l'au moins un conduit du réseau aéraulique ;
- un dispositif de régulation relié à ladite quatrième sonde de température et contrôlant le fonctionnement du dispositif de circulation d'air en fonction de la température mesurées par ladite sonde.

Selon un autre exemple de mise en oeuvre de l'invention le dispositif de régulation contrôle également le fonctionnement de la pompe de recirculation.

Selon un exemple supplémentaire de mise en oeuvre de l'invention le dispositif de régulation comporte en outre un dispositif de commande à distance prévu pour consulter et commander à distance le dispositif de régulation.

Ce dispositif de commande à distance permet avantageusement de consulter, commander et/ou optimiser à distance le fonctionnement du système de climatisation réversible multi-énergie de l'invention.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue en coupe schématique illustrant le système de climatisation de l'invention ;
- la figure 2 est une vue en coupe schématique de l'invention dans laquelle le système de climatisation de l'invention est associé à un chauffe-eau ; et
- la figure 3 est une vue schématique illustrant le fonctionnement d'un dispositif de commande à distance selon l'invention.

### Mode(s) de réalisation de l'invention

Les éléments structurellement et fonctionnellement identiques présents sur plusieurs figures distinctes, sont affectés d'une même référence numérique ou alphanumérique.

Le système de climatisation (1) réversible multi-énergie de l'invention est prévu pour permettre soit le chauffage, soit le refroidissement d'une habitation (2).

Par habitation (2) on entend ici tout type de bâtiment susceptible d'accueillir des personnes, qu'il s'agisse par exemple d'une maison individuelle, d'un appartement, d'un local commercial, d'un atelier industriel, d'une salle des fêtes, d'un gymnase, etc. Il peut également s'agir de tout type de bâtiment pour lesquels la réglementation interdit la circulation de fluides toxiques et/ou inflammables.

Ce système de climatisation (1) comprend une pompe à chaleur (3) située à l'extérieur de l'habitation (2) destinée à en être équipée et un dispositif de chauffage (4) à combustible destiné à être placé à l'intérieur de ladite habitation (2).

Le dispositif de chauffage (4) à combustible est de préférence une cheminée d'âtre (5) ou un poêle à combustible solide, par exemple une cheminée d'âtre à bois ou un poêle à granulés. Dans le cas préféré où il s'agit d'une cheminée d'âtre (5), cette dernière comprend un foyer (6), par exemple fermé par une porte vitrée (7). Ce foyer (6) est placé dans un âtre (7) et il comporte un conduit d'évacuation (8) des gaz et fumées de combustion.

Le dispositif de chauffage (4) à combustible est équipé d'un dispositif de circulation d'air (9) qui prélève l'air de l'habitation (2) pour lui faire traverser un premier échangeur de chaleur (10) puis le diffuser dans l'habitation (2). Dans ce but, le dispositif de circulation d'air (9) comprend un réseau aéraulique (11) de distribution d'air conditionné en température. Ce réseau aéraulique (11) comprend au moins un conduit (12) ou passage d'air similaire raccordé à au moins une entrée d'air (13) qui s'ouvre dans l'habitation (2), de préférence en partie basse d'une pièce d'habitation. L'au moins un conduit (12) ou passage d'air similaire est également raccordé à au moins une sortie d'air (14) qui s'ouvre dans l'habitation (2), de préférence en partie haute d'une pièce d'habitation.

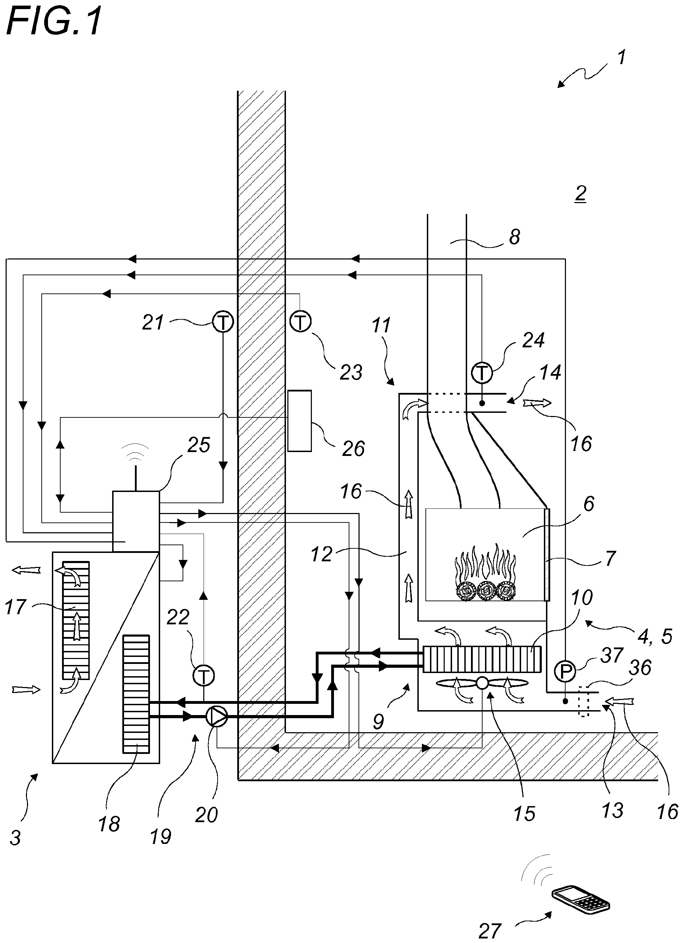

Le dispositif de circulation d'air (9) comprend également un ventilateur (15) ou une turbine qui aspire l'air de l'habitation (2) au niveau de l'au moins une entrée d'air (13) et le souffle dans l'habitation (2) au niveau de l'au moins une sortie d'air (14) après lui avoir fait traverser l'au moins un conduit (12) du réseau aéraulique (11). Cette circulation d'air est représentée par des flèches blanches portant la référence 16 sur la figure 1.

Le premier échangeur de chaleur (10) est placé dans le réseau aéraulique (11), de préférence en partie basse de celui-ci, entre l'au moins une entrée d'air (13) et l'au moins une sortie d'air (14) de sorte que l'air circulant dans le réseau aéraulique (11) traverse également le premier échangeur de chaleur (10).

Lorsque le dispositif de chauffage (4) à combustible est en fonctionnement, il réchauffe l'air qui circule dans le réseau aéraulique (11) du dispositif de circulation d'air (9). Ainsi, le réseau aéraulique (11) est préférentiellement à proximité immédiate d'une partie chaude du dispositif de chauffage (4). Par exemple au moins un conduit (12) est à proximité immédiate du foyer (6) lorsque le dispositif de chauffage (4) est une cheminée d'âtre (5).

La pompe à chaleur (3) est de préférence réversible et fonctionne au moyen d'un premier fluide caloporteur. La pompe à chaleur (3) comporte un dispositif d'échange de calories ou de frigories (17) avec l'extérieur. Ainsi, lorsque la pompe à chaleur (3) est en fonctionnement, son dispositif d'échange de calories ou de frigories (17) échange des calories ou des frigories avec l'air extérieur pour chauffer ou refroidir un second échangeur de chaleur (18) auquel il est raccordé. Le principe de l'invention repose sur l'utilisation second échangeur de chaleur (18) pour chauffer ou refroidir au moins en partie l'habitation selon que la pompe à chaleur (3) fonctionne comme dispositif de chauffage ou de réfrigération.

Afin de favoriser le fonctionnement optimale de la pompe à chaleur (3) le premier fluide caloporteur qu'elle utilise est de préférence un fluide frigorigène de type R410. Ainsi, le premier fluide caloporteur est habituellement un fluide toxique et/ou inflammable voire très inflammable ou explosif et son utilisation dans une habitation n'est généralement pas tolérée par les réglementations en vigueur et son utilisation incompatible avec une cheminée ou poêle à combustion.

L'invention se particularise en ce que le premier échangeur de chaleur (10) échange ses calories ou ses frigories avec le second échangeur de chaleur (18) par l'intermédiaire d'un dispositif de circulation (19) en boucle d'un second fluide caloporteur. Ce second fluide caloporteur étant prévu pour être utilisé dans l'habitation (2), il s'agit d'un fluide caloporteur non toxique et non inflammable. Le second fluide caloporteur est préférentiellement de l'eau, éventuellement additionnée d'antigel.

Le dispositif de circulation (19) en boucle du second fluide caloporteur raccorde le premier échangeur de chaleur (10) au second échangeur de chaleur (18) et autorise l'échange de calories ou de frigories entre ces deux échangeurs de chaleur (10, 18).

Le dispositif de circulation (19) comprend habituellement une pompe de recirculation (20) faisant circuler le second fluide caloporteur en boucle entre les deux échangeurs de chaleur (10, 18).

Lorsque le système de climatisation (1) réversible multi-énergie de l'invention fonctionne en mode chauffage, la pompe à chaleur (3) prélève des calories à l'extérieur de l'habitation (2) par l'intermédiaire de son dispositif d'échange de calories ou de frigories (17), ce qui refroidit l'air extérieur et réchauffe le second échangeur de chaleur (18). Le second échangeur de chaleur (18) réchauffe à son tour le premier échangeur de chaleur (10) par l'intermédiaire du second fluide caloporteur. L'air circulant à travers le premier échangeur de chaleur (10) grâce au dispositif de circulation d'air (9) est alors réchauffé par le premier échangeur de chaleur (10), et éventuellement par le dispositif de chauffage (4) s'il est fonctionnement, afin de réchauffer l'habitation (2).

Lorsque le système de climatisation (1) réversible multi-énergie de l'invention fonctionne en mode réfrigération, la pompe à chaleur (3) fournit des frigories à l'extérieur de l'habitation (2) par l'intermédiaire de son dispositif d'échange de calories ou de frigories (17), ce qui réchauffe l'air extérieur et refroidit le second échangeur de chaleur (18). Le second échangeur de chaleur (18) refroidit à son tour le premier échangeur de chaleur (10) par l'intermédiaire du second fluide caloporteur. L'air circulant à travers le premier échangeur de chaleur (10) grâce au dispositif de circulation d'air (9) est alors refroidit par le premier échangeur de chaleur (10) afin de rafraîchir l'habitation (2).

Dans un mode de réalisation préféré de l'invention le système de climatisation (1) réversible multi-énergie de l'invention comprend également un dispositif de régulation prévu pour commander au moins le fonctionnement de la pompe à chaleur (3) et du dispositif de circulation d'air (9) afin de réguler la température de l'air dans au moins une pièce de l'habitation (2).

Ce dispositif de régulation est prévu pour fournir un surcroît de confort par une température de l'air aussi constante que possible correspondant à une température affichée, commandée ou programmée pour une pièce d'habitation.

Dans ce but, le système de climatisation (1) réversible multi-énergie de l'invention comprend au moins une première sonde de température (21) qui mesure la température extérieure, une seconde sonde de température (22) qui mesure la température du second fluide caloporteur et une troisième sonde de température (23) qui mesure la température dans l'habitation (2).

Le dispositif de régulation comprend un boîtier de commande (25), par exemple sous la forme d'un automate, reliés auxdites sondes de température (21, 22, 23) et qui est relié à la pompe à chaleur (3), au ventilateur (15) ou à la turbine du dispositif de circulation d'air (9) et à la pompe de recirculation (20) du dispositif de circulation (19) pour en commander le fonctionnement.

Selon une variante de l'invention, le système de climatisation (1) réversible multi-énergie de l'invention comprend également une quatrième sonde de température (24) qui mesure la température en sortie de l'au moins un conduit (12) du réseau aéraulique (11). Le dispositif de régulation est également relié à cette quatrième sonde de température (21) et contrôlent le fonctionnement du ventilateur (15) ou de la turbine en fonction de la température mesurées par ladite sonde. Ainsi, par exemple, lorsque la cheminée d'âtre est en fonctionnement et que du bois est brûlé, le dispositif de régulation gère une vitesse appropriée du ventilateur (15) ou de la turbine.

Selon un mode de réalisation avantageuse de l'invention, le système de climatisation (1) réversible multi-énergie comprend également un filtre à air (36) qui épure l'air pénétrant dans l'au moins un conduit (12) du réseau aéraulique (11) au niveau de l'entrée d'air (13). Entre ce filtre à air (36) et le ventilateur (15) ou la turbine, il peut être prévu un capteur de pression (37) qui mesure la pression dans l'au moins un conduit (12) du réseau aéraulique (11) et qui peut par exemple être relié au boîtier de commande (25). Ainsi, en cas de colmatage même partiel du filtre à air (36), le capteur de pression (37) peut détecter une diminution inhabituelle de la pression dans l'au moins un conduit (12) du réseau aéraulique (11) et transmettre cette information au boîtier de commande (25), qui peut par exemple signaler à l'utilisateur un besoin de maintenance pour le filtre à air (36).

Selon une variante non représentée de l'invention, le système de climatisation (1) réversible multi-énergie peut comprendre un filtre à air (36) qui épure l'air circulant en sortie de l'au moins un conduit (12) du réseau aéraulique (11), en amont de la sortie d'air (14). Ainsi, en cas de colmatage même partiel du filtre à air (36), le capteur de pression (37) peut détecter une surpression inhabituelle dans l'au moins un conduit (12) du réseau aéraulique (11). Selon cette variante, on peut également envisager de prévoir un capteur de pression (37) en aval du filtre à air (36), qui peut mesurer une diminution inhabituelle de la pression dans l'au moins un conduit (12) du réseau aéraulique (11) en cas de colmatage du filtre à air (36).

Le boîtier de commande (25) est préférentiellement situé à l'extérieur et intégré à la pompe à chaleur (3).

Afin que l'utilisateur puisse consulter et modifier l'état de fonctionnement du système de climatisation (1) réversible multi-énergie de l'invention, celui-ci peut comporter un dispositif de commande et d'affichage (26), par exemple sous la forme d'un afficheur qui reporte à l'utilisateur les paramètres de fonctionnement du système de climatisation (1) et qui lui permet également de commander ce dernier, à savoir allumer, éteindre et régler la température de consigne du système de climatisation (1). Ces éléments sont ensuite transmis au boîtier de commande (25).

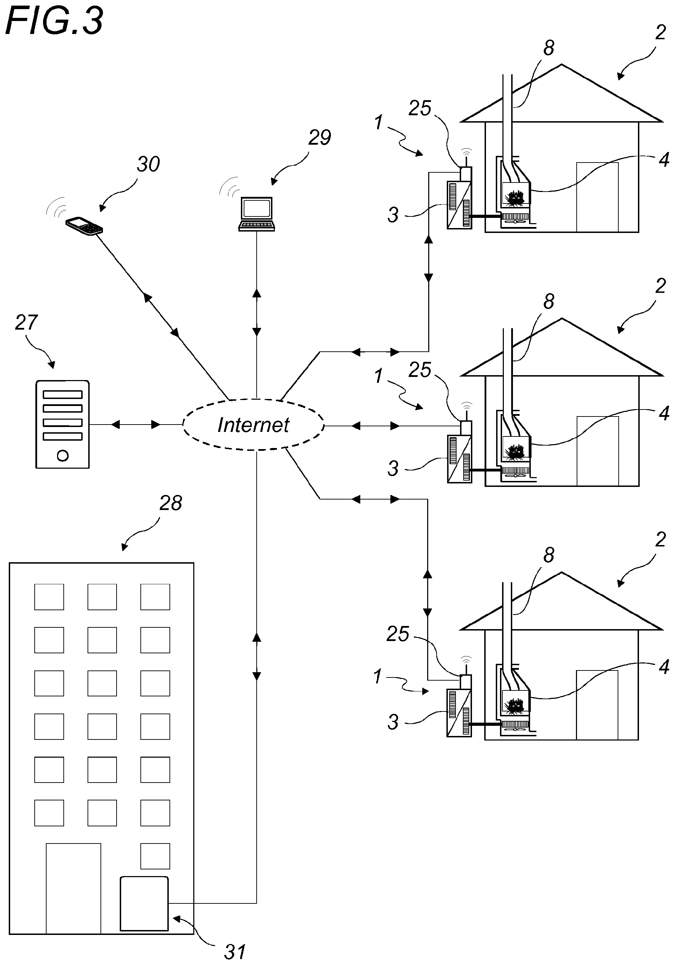

Selon un mode de réalisation préféré de l'invention représenté de façon schématique sur la figure 3, le dispositif de régulation du système de climatisation (1) réversible multi-énergie de l'invention est relié à un système de surveillance et de commande à distance. Ce système de surveillance et de commande à distance est prévu pour permettre à un opérateur et/ou à un utilisateur de consulter et commander à distance le dispositif de régulation.

Le système de surveillance et de commande à distance comprend une connexion préférentiellement de type internet, par exemple par wifi, ou de type radiofréquence, permettant au dispositif de régulation de transmettre tous les paramètres de fonctionnement du système de climatisation (1) réversible multi-énergie de l'invention vers un serveur distant (27), où ces informations sont stockées. Ce serveur distant (27) est préférentiellement réservé en utilisation à un gestionnaire (28) des différents systèmes de climatisation (1) raccordés à ce serveur distant. Ce gestionnaire (28) peut par exemple être l'installateur des systèmes de climatisation (1) ou un de ses partenaires.

Par ce système de surveillance et de commande à distance, le fonctionnement du système de climatisation (1) réversible multi-énergie de l'invention peut être consulté, commandé et/ou optimisé à distance par l'utilisateur et/ou par le gestionnaire (28) des différents systèmes de climatisation (1).

Cette consultation, commande et/ou optimisation à distance peut s'effectuer par exemple au moyen d'un ordinateur (29), d'une tablette ou d'un téléphone portable (30) muni d'une application adaptée, ou par exemple au moyen d'une installation distante (31) prévue à cet effet et gérée par le fabricant et/ou l'installateur du système de climatisation (1) réversible multi-énergie de l'invention, ces différent moyens de communication étant reliés au serveur distant (27), de préférence par l'intermédiaire d'Internet au moyen de protocoles de communication sécurisés.

Grâce à cet accès au serveur distant, par exemple au travers d'un navigateur internet, le gestionnaire (28) peut superviser le fonctionnement de l'ensemble des différents systèmes de climatisation (1) raccordés au serveur distant (27). Cela lui permet notamment d'optimiser à distance le fonctionnement des systèmes de climatisation (1), de les programmer pour des températures différentes selon le jour et l'heure, mais aussi de détecter une éventuelle défaillance dans ces systèmes de climatisation (1), de les éteindre lorsque l'utilisateur est absent et de les allumer en prévision du retour de l'utilisateur.

Une application grand public utilise une application sur téléphone portable (30) qui permet à l'utilisateur de se connecter au serveur distant (27) et/ou directement au dispositif de commande et d'affichage (26) de son système de climatisation (1) réversible multi-énergie afin de gérer sa propre installation.

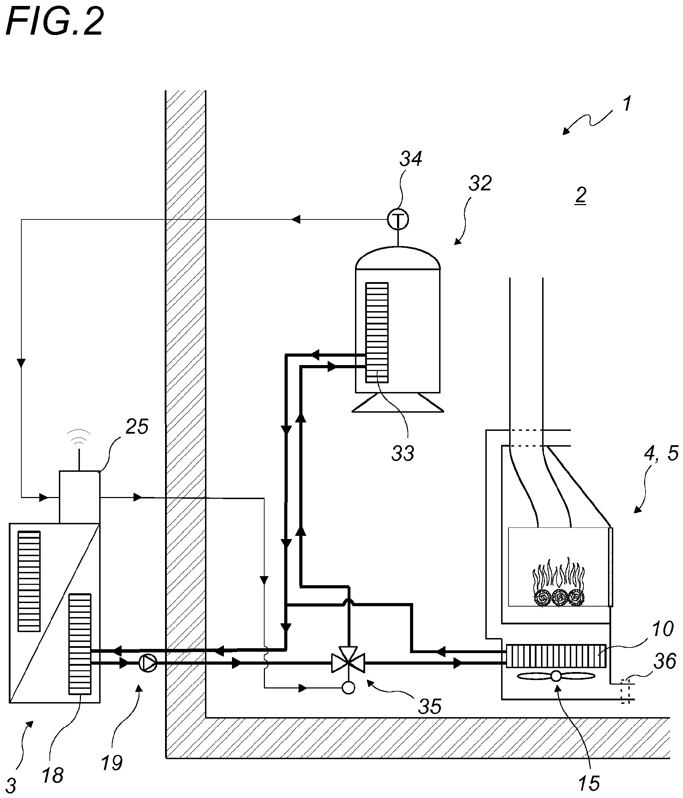

Selon une variante de l'invention représentée sur la figure 2, le système de climatisation (1) réversible multi-énergie de l'invention peut également être associé à un dispositif de génération d'eau chaude (32), par exemple un chauffe-eau ou un ballon de préparation d'eau chaude sanitaire.

Dans ce cas, le dispositif de circulation en boucle d'un second fluide caloporteur (19), qui alimente le premier échangeur de chaleur (10), circule également dans le dispositif de génération d'eau chaude (32), à travers un troisième échangeur de chaleur (33) logé dans le dispositif de génération d'eau chaude (32) pour échanger des calories avec celui- ci.

Dans ce but, une vanne trois-voies (35) et prévue sur une conduite du dispositif de circulation en boucle d'un second fluide caloporteur (19), par exemple sur son circuit aller. Ainsi, selon la position de ladite vanne trois-voies (35), le second fluide caloporteur provenant de la pompe à chaleur (3) est fourni soit au premier échangeur de chaleur (10) du dispositif de chauffage (4) à combustible, soit au troisième échangeur de chaleur (33) du dispositif de génération d'eau chaude (32).

Dans la variante représentée sur la figure 2, la température de l'eau dans le dispositif de génération d'eau chaude (32) est mesurée par une cinquième sonde de température (34) et transmise au dispositif de régulation du système de climatisation (1) réversible multi-énergie de l'invention, par exemple par l'intermédiaire du boîtier de commande (25). Celui-ci, en fonction de la température mesurée par la cinquième sonde de température (34), et en fonction d'autres paramètres prévus par l'installateur et/ou l'utilisateur, pilote la vanne trois-voies (35) de sorte que le second fluide caloporteur provenant de la pompe à chaleur (3) alimente soit le premier échangeur de chaleur (10), soit le troisième échangeur de chaleur (33).

De la même manière, le dispositif de circulation en boucle d'un second fluide caloporteur (19) peut également apporter des calories ou des frigories à d'autres dispositifs d'échange de chaleur afin de couvrir tous les besoins de l'habitation.

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente sans sortir du cadre de la présente invention et une étape décrite de mise en oeuvre du procédé peut être remplacée par une étape équivalente sans sortir du cadre de l'invention tel que défini par les revendications.

## Revendications

1. Système de climatisation (1) réversible multi-énergie pour le chauffage et le refroidissement d'une habitation (2) comprenant une pompe à chaleur (3) destinée à être placée à l'extérieur d'une habitation (2) et un dispositif de chauffage (4) à combustible destiné à être placé à l'intérieur d'une habitation (2), ce système de climatisation (1) étant **caractérisé en ce que** :
- le dispositif de chauffage (4) à combustible comporte un dispositif de circulation d'air (9) qui prélève de l'air pour lui faire traverser un premier échangeur de chaleur (10) puis le diffuser ;
- le dispositif de chauffage (4) à combustible, lorsqu'il est en fonctionnement, réchauffe l'air qui circule dans le dispositif de circulation d'air (9) ;
- la pompe à chaleur (3) fonctionne de manière réversible au moyen d'un premier fluide caloporteur toxique et/ou inflammable et échange des calories ou des frigories avec l'air extérieur pour chauffer ou refroidir un second échangeur de chaleur (18) ; et
- un dispositif de circulation (19) en boucle d'un second fluide caloporteur non toxique et non inflammable raccorde le premier échangeur de chaleur (10) au second échangeur de chaleur (18) et autorise l'échange de calories ou des frigories entre ces deux échangeurs de chaleur (10, 18).

2. Système de climatisation (1) multi-énergie selon la revendication 1, **caractérisé en ce que** le dispositif de chauffage (4) à combustible est une cheminée d'âtre (5) ou un poêle à combustible solide.

3. Système de climatisation (1) multi-énergie selon l'une quelconque des revendications précédentes, **caractérisé en ce que** le premier fluide caloporteur est un fluide frigorigène de type R410.

4. Système de climatisation (1) multi-énergie selon l'une quelconque des revendications précédentes, **caractérisé en ce que** le second fluide caloporteur est de l'eau.

5. Système de climatisation (1) multi-énergie selon l'une quelconque des revendications précédentes, **caractérisé en ce que** le dispositif de circulation d'air (9) comprend un ventilateur (15) ou une turbine qui aspire l'air de l'habitation (2) et le souffle dans l'habitation (2) après lui avoir fait traverser le premier échangeur de chaleur (10).

6. Système de climatisation (1) multi-énergie selon l'une quelconque des revendications précédentes, **caractérisé en ce qu'**il comprend une pompe de recirculation (20) faisant circuler le second fluide caloporteur en boucle entre les deux échangeurs de chaleur (10, 18).

7. Système de climatisation (1) multi-énergie selon l'une quelconque des revendications précédentes, **caractérisé en ce qu'**il comprend en outre :
- une première sonde de température (21) qui mesure la température extérieure ;
- une seconde sonde de température (22) qui mesure la température du second fluide caloporteur ;
- une troisième sonde de température (23) qui mesure la température dans l'habitation (2) ; et
- un dispositif de régulation reliés auxdites sondes de température (21, 22, 23), ledit dispositif de régulation contrôlant le fonctionnement de la pompe à chaleur (3) en fonction des températures mesurées par lesdites sondes.

8. Système de climatisation (1) multi-énergie selon l'une quelconque des revendications précédentes, **caractérisé en ce que** le dispositif de circulation d'air (9) comprend un réseau aéraulique (11) lequel comporte au moins un conduit (12) raccordé à au moins une entrée d'air, et **en ce que** ledit système de climatisation (1) comprend en outre :
- une quatrième sonde de température (24) qui mesure la température en sortie de l'au moins un conduit (12) du réseau aéraulique (11) ;
- un dispositif de régulation relié à ladite quatrième sonde de température (21) et contrôlant le fonctionnement du dispositif de circulation d'air (9) en fonction de la température mesurées par ladite sonde.

9. Système de climatisation (1) multi-énergie selon les revendications 6 et 7, **caractérisé en ce que** le dispositif de régulation contrôle également le fonctionnement de la pompe de recirculation (20).

10. Système de climatisation (1) multi-énergie selon la revendication 7, **caractérisé en ce que** le dispositif de régulation comporte en outre un dispositif de commande à distance (27) prévu pour consulter et commander à distance le dispositif de régulation.
